# EUROPÄISCHE PATENTSCHRIFT

(11) **EP 0 718 238 B1**
(45) Veröffentlichungstag und Bekanntmachung des Hinweises auf die Patenterteilung: **12.05.1999**
(21) Anmeldenummer: 95120421.3
(22) Anmeldetag: 22.12.1995
(51) Int. Cl.: C01C 1/16

(54) **Verfahren zur Herstellung von Ammoniumchlorid**
Process for the preparation of ammonium chloride
Procédé pour la production de chlorure d'ammonium

(30) Priorität: 23.12.1994 DE 4446372
(43) Veröffentlichungstag der Anmeldung: 26.06.1996
(73) Patentinhaber: BASF AKTIENGESELLSCHAFT, 67056 Ludwigshafen (DE)
(72) Erfinder: Ripperger, Willi, Dr., D-67227 Frankenthal (DE); Eberle, Heinrich, D-67069 Ludwigshafen (DE); Reischl, Harald, D-67098 Bad Dürkheim (DE); Feindt, Hans-Jacob, Dr., D-67069 Ludwigshafen (DE)
(74) Vertreter: Isenbruck, Günter, Dr.

(56) Entgegenhaltungen:
- DE-C- 531 500
- US-A- 4 038 369
- CHEMICAL ABSTRACTS, vol. 78, no. 2, 15.Januar 1973 Columbus, Ohio, US; abstract no. 7499p, T. ORITA 'Waste-gas treatment for plastic-waste incinerators.' Seite 218; & JP-A-47 019 882 (TAKUMA BOILER MANUF) 6.Juni 1972
- CHEMICAL ABSTRACTS, vol. 69, no. 8, 19.August 1968 Columbus, Ohio, US; abstract no. 28918d, V.G. SHLYAKHTOV ET AL. 'Chemical condensation of ammonium chloride in a fluidized bed.' Seite 2710; & KHIM. KHIM. TEKHNOL., Bd. 11, Nr. 2, 1968 Seiten 232-235,
- CHEMICAL PROCESSING & ENGINEERING, August 1969 BOMBAY (IN), Seiten 41-42, XP 000564859 H.T. LOKHANDE 'Chemical condensation of ammonium chloride in fluidized beds.'
- CHEMICAL ABSTRACTS, vol. 84, no. 14, 5.April 1976 Columbus, Ohio, US; abstract no. 92310m, V.K. FOMIN ET AL. 'Ammonium fluoride.' Seite 138; & SU-A-489 716 (V.K. FOMIN) 30.Oktober 1975

## Beschreibung

Die Erfindung bezieht sich auf ein Verfahren zur Herstellung von Ammoniumchlorid durch direkte Umsetzung von gasförmigem Ammoniak und gasförmigem Chlorwasserstoff in Gegenwart von Kohlendioxid.

Die direkte Umsetzung von Ammoniak und Chlorwasserstoff ist seit vielen Jahren bekannt. Dabei wurde für die industrielle Herstellung von Ammoniumchlorid bislang eine flüssige Ammoniumphase verwendet. Gasförmige Ammoniumphasen wurden dagegen nur labormäßig verwendet, da die Bildung von Aerosolen den Niederschlag von Ammoniumchlorid erschwert. Wirtschaftlich brauchbare Ergebnisse konnten damit bisher noch nicht erreicht werden (Chem. Process. Eng., Februar 1972, 72, 73).

Aerosole bilden sich zwangsläufig bei der Reaktion von Gasen. Die Aerosolbildung bei der Herstellung von Ammoniumchlorid aus gasförmigem Ammoniak und gasförmigem Chlorwasserstoff wird bereits von Luria und Cohen (Atmospheric Environment, Vol.14 (1980), 665) beschrieben. Die in der Gasatmosphäre gelösten Ammoniumchlorid-Kristalle wachsen nur zum Teil auf den vorgelegten Kristallen auf. Ein erheblicher Teil des gewonnenen Ammoniumchlorids scheidet sich dagegen unkontrolliert auf Bestandteilen der Versuchsanlage ab. Insbesondere werden Kühlflächen aufgrund der hohen Temperaturdifferenz schnell belegt. Dadurch wird die Ableitung der Reaktionswärme aus dem Reaktionsraum behindert, was bei der Umsetzung gasförmiger Phasen wegen der großen freiwerdenden Neutralisations- und Desublimationswärme besonders nachteilig ist.

Die mit der Aerosolbildung verbundenen Nachteile können durch die Verwendung einer Wirbelschicht gemildert werden. Dabei wird kristallines Ammoniumchlorid mit Hilfe eines Gases aufgewirbelt und bildet die Reaktionszone. Das infolge der Reaktion entstehende Ammoniumchlorid lagert sich in diesem Fall auf dem vorgelegten Ammoniumchlorid an, so daß größere Kristalle entstehen können. Dieser Prozeß wird von Schljachtow und Streljzow (Nachrichten aus den Hochschulen der UdSSR, "Chemie und Chemische Technologie", 1968, Nr.2, Seite 1) und von Lokhande (Chem. Process. Eng. (Bombay), August 1969, 41, Chemical condensation of ammonium chloride in fluidized beds) beschrieben. Auch bei dieser Anordnung treten aber erhebliche Verluste durch Aerosolbildung auf.

Eine weitere Möglichkeit zur Verringerung von Verlusten durch Aerosolbildung ergibt sich aus DE-OS 23 18 514. Dort wird das Chlorwasserstoff in Richtung des Gasstromes oberhalb des Ammoniaks in den Reaktionsraum eingeleitet. Dadurch bildet sich eine ruhige Vermischungszone in der sich Ammoniumchlorid bilden kann. Auch dieses Verfahren kann aber die Aerosolbildung und ihre Folgen nicht wesentlich verringern.

Aus der DE-C-531500 ist ein Verfahren zur Herstellung von festem NH₄Cl durch Umsetzung von gasförmigem Ammoniak mit gasförmigem Kohlenwasserstoff bekannt. Das Ammoniak ist dabei in einem Gasstrom anwesend, welcher auch Kohlendioxid enthält. Aus Chemical Abstracts, AN 78, 7499p, ist die Verwendung von Abgas von einem (PVC-)Kunstverbrennungsofen bekannt. Dieser Gasstrom kann neben HCl auch Verbrennungsprodukte wie C0₂ enthalten. Schließlich ist aus der US-A-4038369 ebenfalls die Verwendung eines PCV-Kunststoffverbrennungsgases zur Herstellung von NH₄Cl in der Gasphase bekannt. Auch in diesen Verfahren tritt eine Aerosolbildung mit den entsprechenden Folgen auf.

Aufgabe der Erfindung ist es deshalb, ein Verfahren zur direkten Umsetzung von gasförmigem Ammoniak mit gasförmigem Chlorwasserstoff bereitzustellen, das die Nachteile der Aerosolbildung weitgehend vermeidet und daher industriell anwendbar ist.

Erfindungsgemäß wird diese Aufgabe gelöst durch ein Verfahren zur Herstellung von Ammoniumchlorid durch direkte Umsetzung von gasförmigem Ammoniak und gasförmigem Chlorwasserstoff in Gegenwart von Kohlendioxid, wobei die Reaktion in einer Wirbelschicht aus Ammoniumchlorid durchgeführt wird, wodurch die Aerosolbildung ganz erheblich unterdrückt wird. Es ist vorteilhaft, das Kohlendioxid dem zugeführten Ammoniak beizumischen, bevorzugt mit einem Anteil von 10 bis 50 Vol%. Die Prozentangaben beziehen sich dabei auf das Ammoniak enthaltende zugeführte Material als 100 Vol%. Bei einer weiteren Abwandlung des Verfahrens enthält das gasförmige Ammoniak ammoniakhaltiges Abgas und/oder der gasförmige Chlorwasserstoff chlorwasserstoffhaltiges Abgas, insbesondere aus der Ethylendichloridgewinnung. Das gasförmige Ammoniak bzw. der gasförmige Chlorwasserstoff kann auch durch ammoniakhaltiges bzw. chlorwasserstoffhaltiges Abgas ersetzt werden.

Bei einer bevorzugten Ausführungsform des Verfahrens wird die Umsetzung von Ammoniak und Chlorwasserstoff in einer Wirbelschicht aus Ammoniumchlorid durchgeführt. Dabei ist es vorteilhaft, daß die Verwirbelung des Ammoniumchlorids durch Kohlendioxidgas erfolgt. Es ist dabei besonders vorteilhaft die Temperatur in der Wirbelschicht zwischen 60 und 230 °C, vorzugsweise zwischen 90 und 140 °C zu halten. Weiterhin ist es von Vorteil, wenn das gasförmige Ammoniak, insbesondere ein Gemisch von Ammoniak und Kohlendioxid und/oder der gasförmige Chlorwasserstoff direkt in die Wirbelschicht eingeleitet werden. Als Gemisch aus Ammonaide und Kohlendioxid kann insbesondere ein entsprechendes Abgas aus der Melaminproduktion verwendet werden. Das gasförmige Ammoniak, insbesondere ein Gemisch von Ammoniak und Kohlendioxid und/oder der gasförmige Chlorwasserstoff kann dabei auch gemeinsam mit dem Wirbelgas eingeleitet werden.

Bevorzugt ist eine Ausführungsform, bei der in einem Reaktor der Abstand zwischen Zuführungseinrichtungen für Ammoniak beziehungsweise für Chlorwasserstoff in den Reaktor und Kühleinrichtungen so gewählt wird, daß an den Kühleinrichtungen wenigstens 95 % des Ammoniaks bereits umgesetzt sind. Damit wird eine Belegung der Kühlflächen weitgehend vermieden. Typischerweise beträgt dieser Abstand 10 bis 20 cm. Es ist außerdem vorteilhaft, das gasförmige Ammoniak- und den gasförmigen Chlorwasserstoff in verschiedenen Ebenen entlang der Längsachse des Reaktors zuzuführen. Bevorzugt ist auch eine Zuleitung eines oder mehrerer der Gase durch einen Gasverteilerboden des Reaktors, insbesondere wenn dieser ein Rührwerk zur Durchmischung der zugeleiteten Gase besitzt.

Die Erfindung und vorteilhafte Ausführungsformen werden nun anhand der Figuren 1 bis 3 beschrieben.
- Fig. 1:: Schematischer Aufbau einer Anlage zur Durchführung des erfindungsgemäßen Verfahrens
- Fig. 2:: Details eines Reaktors der Anlage, nämlich
a) Gaszuleitung durch mehrere Zuführungseinrichtungen
b) Gasverteilerboden mit Rührer
- Fig. 3:: Schematischer Aufbau der Anlage mit einer hochexpandierten Wirbelschicht

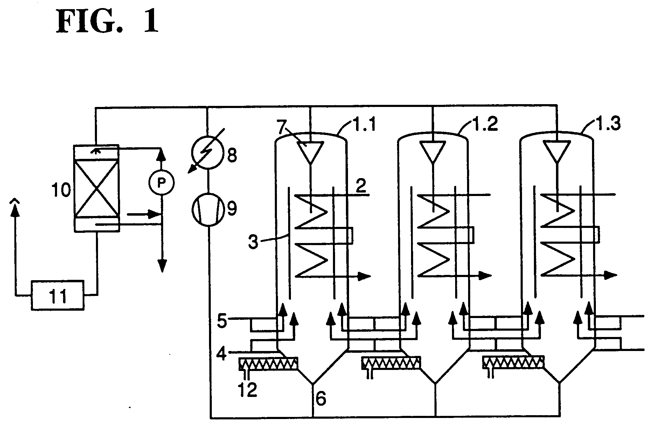

Fig. 1 zeigt parallel arbeitende Reaktoren 1.1, 1.2 und 1.3. Ammoniakgas und Kohlendioxidgas wird über Zuführungseinrichtungen 4, Chlorwasserstoff über Zuführungseinrichtungen 5 in den Reaktor gebracht. Das Kohlendioxidgas könnte aber auch über eine getrennte Leitung in den Reaktor geführt werden.

In der gezeigten Ausführungsform wird durch die Zuführung von mit Hilfe eines Wirbelgases aufgewirbeltem Ammoniumchlorid eine Wirbelschicht erzeugt. In einer bevorzugten Ausführungsform werden die reaktiven Gase direkt in die Wirbelschicht eingeleitet. Das Wirbelgas, bevorzugt Kohlendioxid, wird über einen Zyklon oder Filter 7 wieder abgeleitet. Ein Teilstrom davon wird im Kühler 8 gekühlt und über das Kreisgebläse 9 und über Zuführung 6 wieder zu dem Reaktor 1 geleitet. Es ist ebenso möglich das Ammonium- und/oder Chlorwasserstoffgas gemeinsam mit dem Wirbelgas zuzuführen, weil damit eine noch gleichmäßigere Verteilung der Reaktionsgase in der Wirbelschicht erreicht werden kann.

In dem in Fig. 1 gezeigten Reaktor 1 ist außerdem ein zylindrisches Leitblech 3 vorgesehen, das die Kühlwasserkreisläufe 2 umgibt. Die zugeführten Reaktionsgase gelangen dadurch bevorzugt in den Zwischenraum zwischen Reaktorwand und Leitblech. Dort werden sie zu Ammoniumchlorid umgesetzt, das sich an den Ammoniumchlorid-Kristalliten der Wirbelschicht anlagert. Das Ammoniumchlorid sinkt innerhalb des Leitbleches nach unten und wird dabei durch die Kühlwasserkreisläufe 2 gekühlt. Schließlich wird das ausgefallene Ammoniumchlorid über Ableitungseinrichtungen 12 aus dem Reaktor 1 entfernt. Dieser interne Kreislauf wird durch die Verwendung eines Leitbleches 3 erheblich begünstigt. Der Reaktor kann jedoch auch ohne den Einbau von Leitblechen betrieben werden.

Durch die Kühlwasserkreisläufe wird die Temperatur in der Wirbelschicht bevorzugt zwischen 60 und 230 °C, vorzugsweise zwischen 90 und 140 °C gehalten. Um die Ablagerung von Ammoniumchlorid auf den Kühlwasserkreisläufen zu verhindern ist es vorteilhaft die Zuführungseinrichtungen 4 bzw. 5 etwa 0,10 m von den Kühlwasserkreisläufen anzubringen. Der Abstand muß im Einzelfall auf die Reaktionsbedingungen (Wirbelgasgeschwindigkeit, Durchsatz, Reaktortemperaturen) abgestimmt werden. Die Anbringung eines Leitbleches 3 erleichtert dabei die Einstellung der Temperatur in der Wirbelphase, da Reaktionsraum und Abkühlraum stärker getrennt sind.

Zur Kontrolle einer eventuellen Aerosolbildung und zur Ausschleusung der nicht an der Reaktion beteiligten Gase wird ein Teilstrom des über den Zyklon bzw. Filter 7 abgeführten Wirbelgases einer Abgaswäsche 10 zugeführt. Überschüssiger Chlorwasserstoff wird darin mit Ammoniakwasser neutralisiert und der Gasstrom von mitgerissenem Ammoniumchlorid-Feinstaub befreit. Der Abgaswäsche nachgeschaltet ist eine Gaskammer 11. Die Sichttiefe in der Kammer ist dabei ein Maß für die Menge der auftretenden Aerosole.

Fig. 2a zeigt eine mögliche Anordnung von Zuführungseinrichtungen, hier Düsen für die reagierenden Gase. Um eine gleichmäßige Verwirbelung zu erreichen ist es vorteilhaft, mehrere Düsenpaare für die Zuführung von Ammoniak und Chlorwasserstoff bzw. die diese Komponenten enthaltenen Gasgemische vorzusehen. Die Düsen für Ammoniak und Chlorwasserstoff werden bevorzugt in unterschiedlicher Höhe entlang des Gasstromes angebracht.

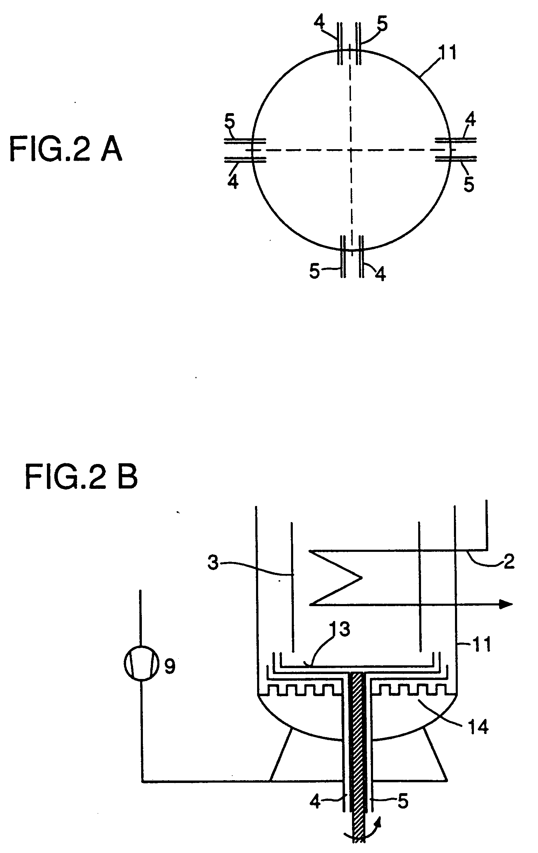

Fig. 2b zeigt einen Reaktor 1 mit einem Gasverteilerboden 14. Ein Rührwerk 13, das von einer rotierenden Welle angetrieben wird, verteilt die zugeführten Reaktanten besonders gleichmäßig.

### Beispiel 1

In dem Reaktor 1 wurden 23 kg NH₄Cl-Kristalle vorgelegt. Als Wirbelgas diente Stickstoff. Entsprechend wurde kein NH₃/CO₂-Gemisch, sondern ein NH₃/N₂-Gemisch verwendet.

Das Wirbelgas wurde mit einer Durchsatzmenge von 12.000 l/h dem Reaktor zugeführt. Dies entspricht einer Leerrohrgasgeschwindigkeit von 10 cm/s. Die Höhe der Wirbelschicht betrug 1,20 m im expandierten Zustand.

Über die zunächst mit 4,5 bar Dampf beheizten Kühlschlangen wurde die Wirbelschicht auf 110 °C aufgeheizt. Anschließend wurde von Dampf auf Kühlwasser umgestellt und durch die Düsen 4 und 5 NH₃/N₂-Gemisch (70 Vol% NH₃, 30 Vol% N₂) bzw. HCl-Gas zudosiert. Die zugeführten Mengen betrugen 675 l/h NH₃/N₂-Gemisch und 678 l/h HCl.

Bereits wenige Minuten nach Zugabe der Reaktionsgase füllt sich die Gaskammer 11 trotz laufender Abgaswäsche mit NH₄Cl-Aerosolen. Die Sichttiefe betrug nur noch max. 1 cm.

### Beispiel 2

Anordnung und Durchführung des Versuchs entsprechen dem Versuch in Beispiel 1. Statt dem NH₃/N₂-Gemisch wurde ein NH₃/CO₂-Gemisch (70 Vol% NH₃, 30 Vol% CO₂) dem Reaktor zugeführt. Um das Ausfallen von Carbamat zu verhindern, wurden das Ammoniakgas und das Kohlendioxidgas vor dem Vermischen auf 80 °C aufgeheizt und erst danach in die Wirbelschicht geleitet. Die Temperatur in der Wirbelschicht betrug 110 bis 115 °C.

Während der gesamten Versuchsdauer von etwa 4 Stunden war in der Gaskammer 11 nur eine leichte Aerosolbildung zu beobachten. Die Sichttiefe betrug während der gesamten Versuchsdauer etwa 10 cm, das entspricht der Tiefe der Gaskammer 11.

Die Kornanalyse vor und nach dem Versuch zeigte, daß das Ammoniumchlorid sehr gleichmäßig aufgewachsen war (siehe Tabelle).

| | **vor Versuch Gew.-%** | **nach Versuch Gew.-%** |
|---|---|---|
| > 0,40 mm | 0,0 | 0,0 |
| 0,30 - 0,40 mm | 1,0 | 6,6 |
| 0,25 - 0,30 mm | 14,2 | 32,5 |
| 0,20 - 0,25 mm | 36,0 | 31,7 |
| 0,15 - 0,20 mm | 34,8 | 16,9 |
| 0,12 - 0,15 mm | 11,8 | 2,9 |
| 0,10 - 0,12 mm | 1,4 | 0,7 |
| < 0,10 mm | 0,8 | 8,7 |

### Beispiel 3

Ein besonderer wirtschaftlicher Vorteil entsteht bei dem erfindungsgemäßen Verfahren, wenn statt der Ammoniak- oder Chlorwasserstoffkomponente Gasgemische eingesetzt werden können, die als Abfallprodukt aus anderen chemischen Reaktionen zur Verfügung stehen. So kann als NH₃/CO₂-Gemisch das entsprechende Abgas aus der Melaminproduktion verwendet werden. Statt der reinen HCl-Komponente kann zum Beispiel ein mit organischen und/oder chlororganischen Anteilen behaftete Abgas aus der Ethylendichloridgewinnung eingesetzt werden.

Unter den Versuchsbedingungen von Beispielen 1 und 2 wurde ein bei der Melaminproduktion anfallendes NH₃/CO₂-Gemisch (60 bis 80 Vol% NH₃, 40 bis 20 Vol% CO₂) sowie ein HCl-Abgas aus der Vinylchloridproduktion (99,2 Vol% HCl).

Im Wirbelverhalten, Ausbeute und Kornspektrum war kein Unterschied zu den vorgenannten Beispielen festzustellen. Die in dem Chlorwasserstoff noch enthaltenen organischen Chlorverbindungen wurden vollständig mit dem Abgas ausgeschleust, das anfallende Ammoniumchlorid erfüllte voll die Spezifikationen.

### Beispiel 4

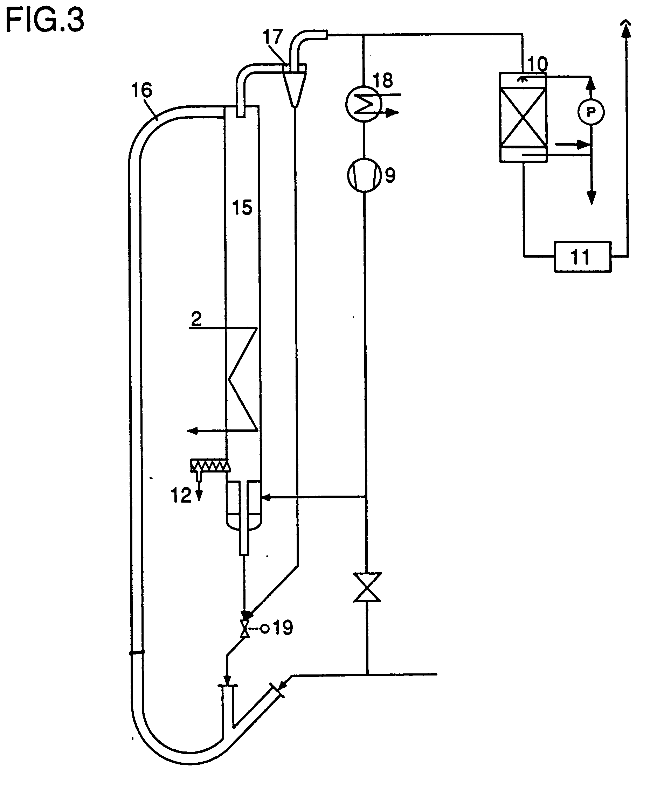

Besonders günstig ist die Desublimation von Ammoniumchlorid in einer hochexpandierten Wirbelschicht. Fig. 3 zeigt schematisch den Aufbau einer Versuchsanlage mit einer hochexpandierten Wirbelschicht. Die Anlage besteht aus einer Kühlwirbelschicht 15 mit einem Durchmesser von etwa 100 mm. Die Reaktionszone besteht aus einer hochexpandierten Wirbelschicht 16 mit einem Durchmesser von etwa 20 mm.

Die Reaktanden HCl-Gas und NH₃/CO₂-Gemisch werden in die Reaktionszone eingedüst. Der Volumenstrom des CO₂ wird so eingestellt, daß eine mittlere Gasgeschwindigkeit von 4 m/s in der Reaktionszone erreicht wird. Als Desublimationskeime des Ammoniumchlorids sowie zur Kompensation der Exothermie der ablaufenden Reaktion werden in die Reaktionsgase NH₄Cl-Kristalle mit einer Temperatur von ca. 100 °C über das Feststoffdosierventil 19 beigemengt. Der Massenstrom der Kristalle beträgt üblicherweise 50 bis 300 kg/m²/s. Die Menge der zudosierten NH₄Cl-Kristalle wird so eingestellt, daß sich eine Temperaturerhöhung der Kristalle um ca. 30 °C ergibt. Sich bildende Ammoniumchloridaerosole und Feinstaub werden bei den daraus resultierenden Temperaturen am Ende der Reaktionszone 16 an die zudosierten Kristalle gebunden.

Nach dem Verlassen der Reaktionszone erfolgt eine Gas-Feststoff-Trennung. Dies wird erreicht durch einen tangentialen Einlauf des Gasfeststoffgemisches am Kopf der Kühlerwirbelschicht 15. Die abgeschiedenen Kristalle werden dann entsprechend auf 100 °C gekühlt und dienen zum einen als neue Desublimationskeime bzw. Wärmeträger in der Reaktionszone und zum anderen als Produkt, das mit der Schnecke 12 abgezogen wird.

Der Boden der Wirbelschicht 15 hat eine Öffnung, um einen Produktabzug zur Einspeisung in die Reaktionszone zu ermöglichen. Die Kühlung der Kristalle erfolgt mittels in die Wirbelschicht eingetauchter Kühlflächen mit Kühlwasser. Das Wirbelgas wird im Kreis über den Wärmetauscher 18 und das Gebläse 9 geleitet. Die Wirbelschicht 15 verlassender Feinstaub wird im Zyklon bzw. Filter 17 abgeschieden und mittels der Feststoffdosierung 19 als Keime der Reaktionszone zugeführt.

## Patentansprüche

1. Verfahren zur Herstellung von Ammoniumchlorid durch direkte Umsetzung von gasförmigem Ammoniak und gasförmigem Chlorwasserstoff in Gegenwart von Kohlendioxid, **dadurch gekennzeichnet, daß** die Reaktion in einer Wirbelschicht aus Ammoniumchlorid durchgeführt wird.

2. Verfahren nach Anspruch 1, **dadurch gekennzeichnet, daß** die Verwirbelung des Ammoniumchlorids durch Kohlendioxidgas erfolgt.

3. Verfahren nach Anspruch 1 oder 2, **dadurch gekennzeichnet, daß** die Temperatur in der Wirbelschicht zwischen 60 und 230 °C, vorzugsweise zwischen 90 und 140 °C gehalten wird.

4. Verfahren nach einem der Ansprüche 1, 2 oder 3, **dadurch gekennzeichnet, daß** das gasförmige Ammoniakgas, insbesondere in Mischung mit Kohlendioxid, und/oder der gasförmige Chlorwasserstoff direkt in die Wirbelschicht eingeleitet werden.

5. Verfahren nach Anspruch 4, **dadurch gekennzeichnet, daß** als Mischung von gasförmigen Ammoniak und Kohlendioxid Abgase aus der Melaminproduktion verwendet werden.

6. Verfahren nach einem der Ansprüche 1 bis 5, **dadurch gekennzeichnet, daß** das gasförmige Ammoniak, insbesondere in Mischung mit Kohlendioxid, und/oder der gasförmige Chlorwasserstoff gemeinsam mit dem Wirbelgas zugeleitet werden.

7. Verfahren nach einem der vorhergehenden Ansprüche, **dadurch gekennzeichnet, daß**in einem Reaktor (1) der Abstand zwischen Zuführungseinrichtungen (4) für Ammoniak bzw. (5) für Chlorwasserstoff und Kühleinrichtungen (2) derart gewählt wird, daß an den Kühleinrichtungen mindestens 95 % des Ammoniaks bereits umgesetzt sind.

8. Verfahren nach einem der vorhergehenden Ansprüche, **dadurch gekennzeichnet, daß** das gasförmige Ammoniak- und der gasförmige Chlorwasserstoff in verschiedenen Ebenen entlang der Längsachse des Reaktors (1) zugeführt werden.

9. Verfahren nach einem der vorhergehenden Ansprüche, **dadurch gekennzeichnet, daß** der Reaktor (1) einen Gasverteilerboden aufweist, durch den eines oder mehrere der Gase eingeleitet werden.

10. Verfahren nach Anspruch 9, **dadurch gekennzeichnet, daß** die zugeleiteten Gase mit Hilfe eines Rührwerks (13) durchmischt werden.

## Claims

1. A process for the preparation of ammonium chloride by direct reaction of gaseous ammonia and gaseous hydrogen chloride in the presence of carbon dioxide, wherein the reaction is carried out in a fluidized bed comprising ammonium chloride.

2. A process as claimed in claim 1, wherein the fluidization of the ammonium chloride is effected by carbon dioxide gas.

3. A process as claimed in claim 1 or 2, wherein the temperature in the fluidised bed is kept at from 60 to 230°C, preferably from 90 to 140°C.

4. A process as claimed in any of claims 1, 2 and 3, wherein the gaseous ammonia, in particular as a mixture with carbon dioxide, or the gaseous hydrogen chloride is passed directly into the fluidized bed.

5. A process as claimed in claim 4, wherein exit gases from melamine production are used as the mixture of gaseous ammonia and carbon dioxide.

6. A process as claimed in any of claims 1 to 5, wherein the gaseous ammonia, in particular as a mixture with carbon dioxide, or the gaseous hydrogen chloride is passed in together with the fluidization gas.

7. A process as claimed in any of the preceding claims, wherein, in a reactor (1), the distance between feed means (4) for ammonia or (5) for hydrogen chloride and cooling means (2) is chosen so that at least 95% of the ammonia has already reacted at the cooling means.

8. A process as claimed in any of the preceding claims, wherein the gaseous ammonia and the gaseous hydrogen chloride are fed in at different levels along the longitudinal axis of the reactor (1).

9. A process as claimed in any of the preceding claims, wherein the reactor (1) has a gas distributor base through which one or more of the gases are passed.

10. A process as claimed in claim 9, wherein the gases passed in are thoroughly mixed with the aid of a stirrer (13).

## Revendications

1. Procédé pour la préparation de chlorure d'ammonium par réaction directe d'ammoniac gazeux et d'acide chlorhydrique gazeux en présence de dioxyde de carbone, caractérisé par le fait que la réaction est effectuée dans un lit tourbillonnaire de chlorure d'ammonium.

2. Procédé selon la revendication 1, caractérisé par le fait que la mise en tourbillon du chlorure d'ammonium est réalisée par du gaz dioxyde de carbone.

3. Procédé selon la revendication 1 ou 2, caractérisé par le fait que la température dans le lit tourbillonnaire est maintenue entre 60 et 230 °C, de préférence entre 90 et 140 °C.

4. Procédé selon l'une des revendications 1, 2 ou 3, caractérisé par le fait que le gaz ammoniac gazeux, en particulier en mélange avec du dioxyde de carbone, et/ou l'acide chlorhydrique gazeux, est introduit directement dans le lit tourbillonnaire.

5. Procédé selon la revendication 4, caractérisé par le fait que l'on utilise comme mélange d'ammoniac gazeux et de dioxyde de carbone des gaz résiduels provenant de la production de mélamine.

6. Procédé selon l'une des revendications 1 à 5, caractérisé par le fait que l'ammoniac gazeux, en particulier en mélange avec du dioxyde de carbone, et/ou l'acide chlorhydrique gazeux sont introduits conjointement avec le gaz de tourbillonnement.

7. Procédé selon l'une des revendications précédentes, caractérisé par le fait que, dans un réacteur (1), on choisit la distance entre les dispositifs d'introduction (4) pour l'ammoniac et (5) pour l'acide chlorhydrique et les dispositifs de refroidissement (2) de telle sorte qu'au moins 95% de l'ammoniac soit déjà transformé au niveau des dispositifs de refroidissement.

8. Procédé selon l'une des revendications précédentes, caractérisé par le fait que l'ammoniac gazeux et l'acide chlorhydrique gazeux sont introduits sur des plans différents le long de l'axe longitudinal du réacteur (1).

9. Procédé selon l'une des revendications précédentes, caractérisé par le fait que le réacteur (1) présente un fond répartiteur de gaz à travers lequel sont introduits un ou plusieurs des gaz.

10. Procédé selon la revendication 9, caractérisé par le fait que les gaz introduits sont mélangés au moyen d'un agitateur (13).
